Europäisches Patentamt

European Patent Office

Office européen des brevets

(19)

(11) Numéro de publication : **0 125 189**
**B1**

(12) **FASCICULE DE BREVET EUROPÉEN**

(45) Date de publication du fascicule du brevet :
03.12.86

(21) Numéro de dépôt : **84400941.5**

(22) Date de dépôt : **09.05.84**

(51) Int. Cl.⁴ : **B 21 D 43/10**, B 65 G 47/90

(54) **Chargeur de presse.**

(30) Priorité : **09.05.83 FR 8307680**

(43) Date de publication de la demande :
**14.11.84 Bulletin 84/46**

(45) Mention de la délivrance du brevet :
**03.12.86 Bulletin 86/49**

(84) Etats contractants désignés :
**AT BE CH DE FR GB IT LI LU NL SE**

(56) Documents cités :
**CH-A- 426 637**
**DE-A- 2 350 735**
**FR-A- 2 058 195**
**FR-A- 2 439 068**
**FR-A- 2 522 999**
**GB-A- 1 395 058**
**GB-A- 1 537 312**

(73) Titulaire : **POLYMATIC Société Anonyme dite:**
**95 rue Pierre Grange**
**F-94120 Fontenay s/Bois (FR)**

(72) Inventeur : **Mifsud, Gilles**
**11 route de Crèvecoeur**
**F-77163 Mortcerf (FR)**
Inventeur : **Biron, Maurice**
**4 Avenue des Volubilis**
**F-93220 Gagny (FR)**

(74) Mandataire : **Roger-Petit, Jean-Camille et al**
**OFFICE BLETRY 2, Boulevard de Strasbourg**
**F-75010 Paris (FR)**

Jouve, 18, rue St-Denis, 75001 Paris, France

## Description

La présente invention concerne un appareil de manutention comportant un bâti sur lequel peut coulisser entre deux positions extrêmes un équipage mobile, et des moyens pour faire coulisser cet équipage mobile d'une extrémité à l'autre de ce bâti, cet équipage mobile étant constitué d'un premier chariot porté par ce bâti et entraîné directement en coulissement sur lui par les moyens précités, et un deuxième chariot, susceptible d'être entraîné en translation par le premier et muni de moyens de préhension d'objets, qu'il peut saisir à une extrémité de son coulissement et déposer à l'autre extrémité dudit coulissement, ce deuxième chariot étant automatiquement déplacé en hauteur par rapport au premier chariot à chacune de ses extrémités de coulissement par des galets portés par ledit premier chariot, coopérant avec des cames prévues dans ledit deuxième chariot.

Le Brevet CH-A-426 637 montre un appareil de manutention comportant un bâti sur lequel peut coulisser entre deux positions extrêmes un équipage mobile, et des moyens pour faire coulisser cet équipage mobile d'une extrémité à l'autre de ce bâti, cet équipage mobile étant constitué d'un premier chariot porté par ce bâti et entraîné directement en coulissement sur lui par les moyens précités, et un deuxième chariot, susceptible d'être entraîné en translation par le premier et muni de moyens de préhension d'objets, qu'il peut saisir à une extrémité de son coulissement et déposer à l'autre extrémité dudit coulissement, ce deuxième chariot étant automatiquement déplacé en hauteur par rapport au premier chariot à chacune de ses extrémités de coulissement par des galets portés par ledit premier chariot, coopérant avec des cames prévues dans ledit deuxième chariot.

Le Brevet GB-A-1 537 312 montre un chargeur de presse qui comprend un maneton fixé sur une chaîne qui décrit un cycle carré. Ce maneton entraîne un premier chariot sur le plan horizontal sur lequel est monté un deuxième chariot guidé verticalement. Quand le maneton se trouve sur la partie verticale de la chaîne, il entraîne le deuxième chariot. Afin d'obtenir un rayon minimum entre la course horizontale et la course verticale par rapport au rayon de la poulie de la chaîne, une correction est obtenue par came et pignons.

La présente invention a pour objet un appareil de manutention du type précité, spécialement agencé pour constituer un chargeur de presse susceptible de saisir au voisinage d'une des extrémités de son bâti la tôle supérieure d'un empilage de tôles destinées à être usinées successivement, à la soulever sensiblement verticalement, puis à la transporter jusqu'à l'autre extrémité du bâti et à l'y déposer, par un abaissement sensiblement vertical, dans la presse précitée, pour y être usinée. Cet objet est résolu par les caractéristiques de la revendication 1.

Le dessin annexé montre à titre d'exemple un mode de réalisation de la présente invention.

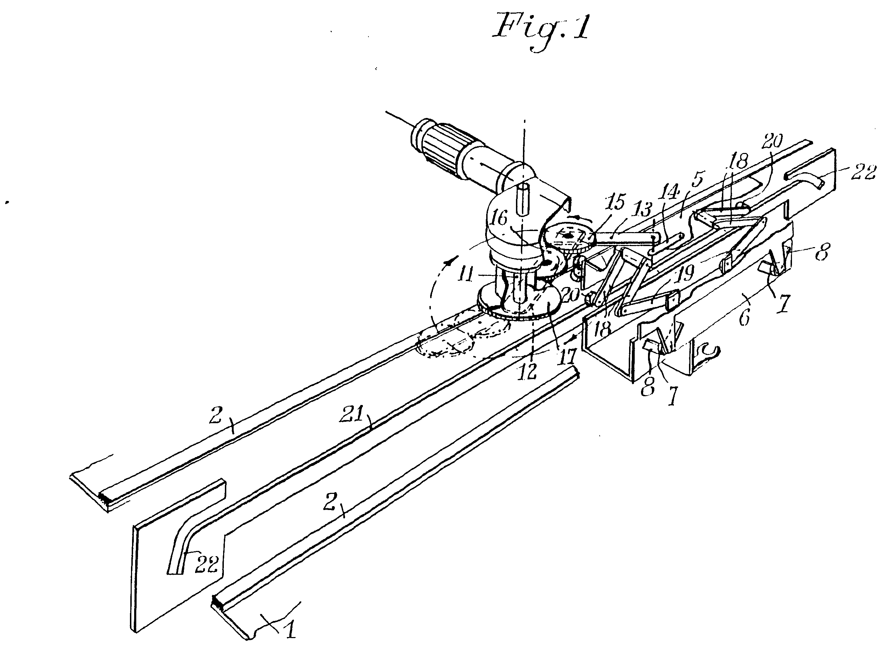

La figure 1 est une vue d'ensemble, en perspective, avec arrachement.

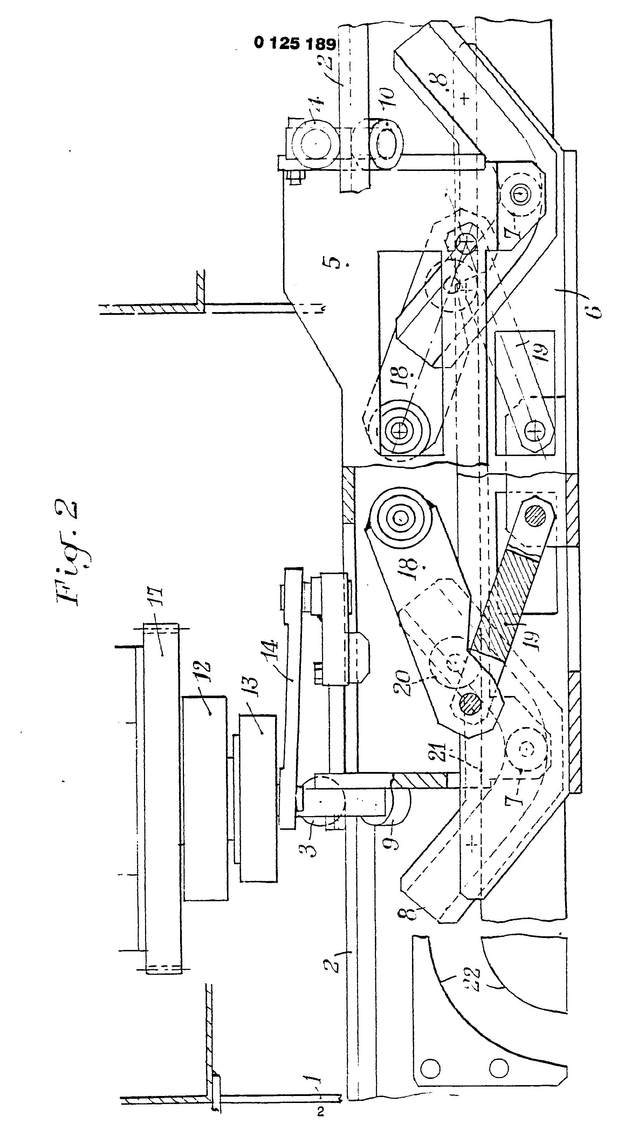

La figure 2 est une vue partielle à plus grande échelle, en coupe longitudinale, l'équipage mobile étant dans une position centrale.

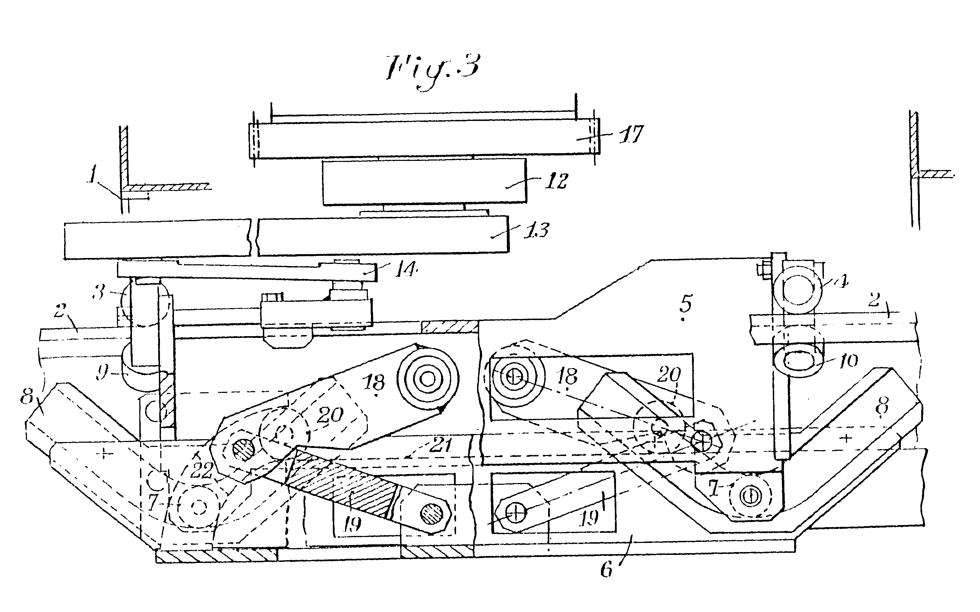

La figure 3 est une vue analogue, l'équipage mobile étant près de sa fin de course et avant déplacement vers le bas du chariot inférieur.

La figure 4 est une vue analogue, l'équipage mobile étant en fin de course et le chariot inférieur en position basse.

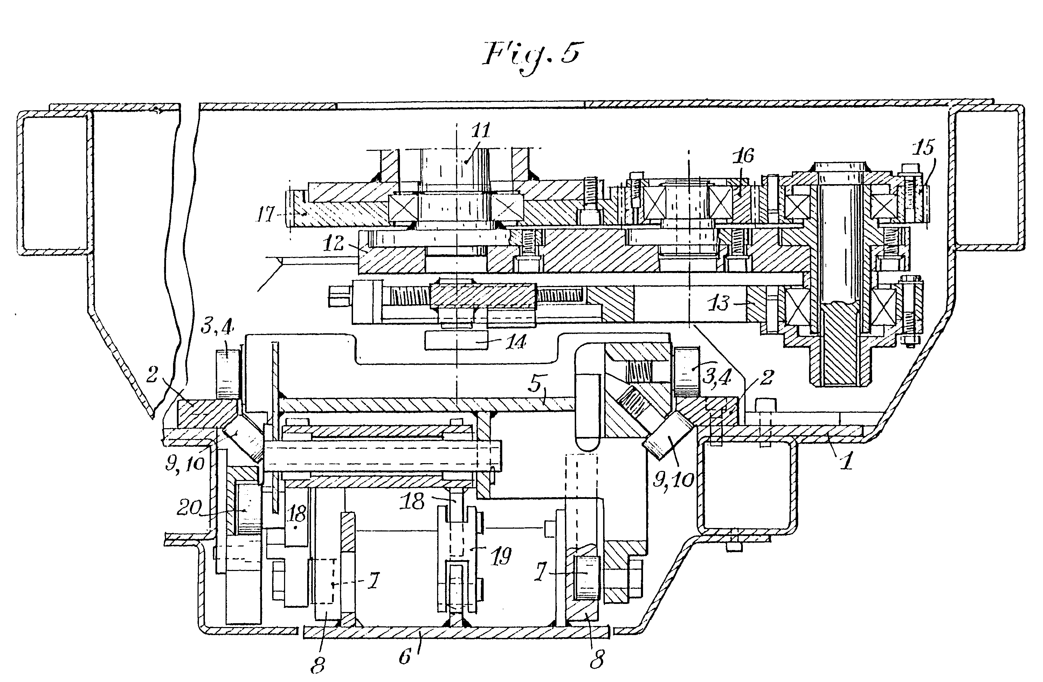

La figure 5 est une vue en coupe transversale.

Le bâti 1 comporte deux rails parallèles 2, sur lesquels peuvent rouler deux paires de galets 3 et 4, supportant respectivement chacune des extrémités du chariot supérieur 5 auquel le chariot inférieur 6 est suspendu par quatre galets 7 montés sur le chariot supérieur 5, engagés dans des cames 8 en forme de V à branches inclinées du chariot inférieur 6 ; des galets à axes inclinés, 9 et 10 coopèrent avec les deux rails parallèles 2, et les deux paires de galets 3 et 4, pour guider le chariot supérieur 5 dans ses déplacements alternatifs d'une extrémité à l'autre du bâti 1.

Ces déplacements alternatifs sont obtenus à partir d'un arbre de commande 11 solidaire en rotation d'un bras 12, à l'extrémité libre duquel est montée rotatif autour d'un axe parallèle à l'arbre de commande 11 une bielle 13 dont l'extrémité libre est attelée au chariot supérieur 5 par l'intermédiaire d'une biellette 14.

La bielle 13 est solidaire en rotation d'un pignon d'extrémité 15, en prise avec un pignon intermédiaire 16, librement rotatif autour d'un axe porté par le bras 12 et parallèle à l'arbre de commande 11, également en prise avec un pignon central 17 concentrique à l'arbre de commande 11 et dont le nombre de dents est double de celui du pignon d'extrémité 15.

Avec ce dispositif, communément appelé bras sinus, quand le bras 12 fait une rotation de 360° autour de son axe, la bielle 13 fait elle-même une rotation de 360° autour de son axe, en sens inverse, en entraînant le chariot supérieur 5 dans un déplacement alternatif dont l'amplitude maximale est égale au double de la somme des longueurs du bras 12 et de la bielle 13.

La liaison du chariot supérieur 5 avec le chariot inférieur 6 par les galets 7 engagés dans les cames en V8 est complétée par quatre paires de bielles 18 et 19.

A chacune des extrémités des déplacements horizontaux alternatifs du chariot supérieur 5 sur les rails 2, le déplacement vertical du chariot inférieur 6 est réalisé comme suit :

Des galets 20 montés sur les bielles 18a des paires de bielles 18, 19 de l'une des extrémités de l'équipage mobile, qui roulent sur les rails horizontaux 21, pénètrent dans les cames 22 du côté correspondant du bâti 1 qui les fait pivoter vers le bas.

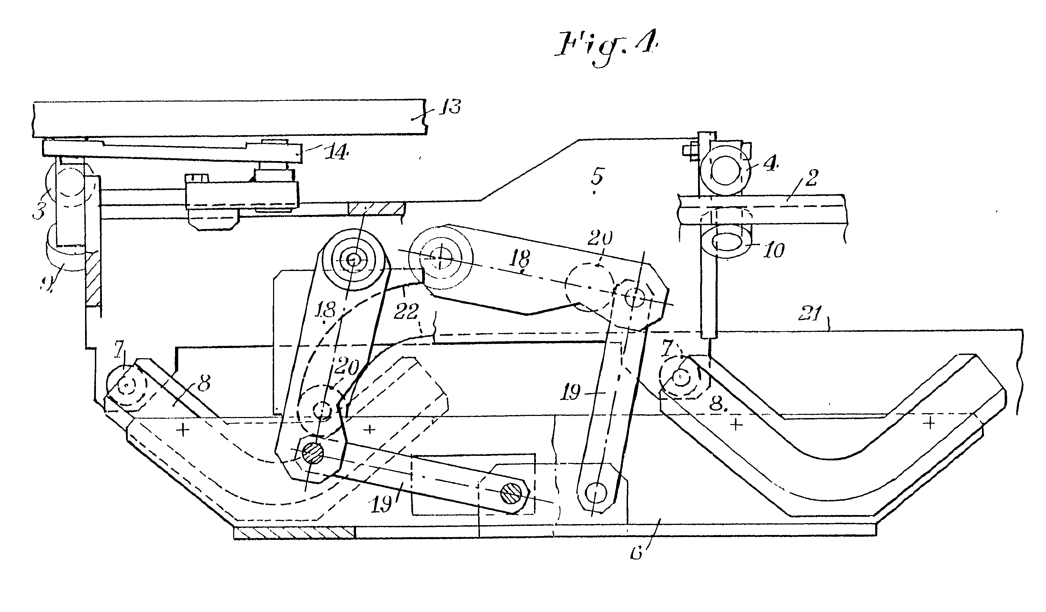

La tendance du chariot inférieur 6 à poursuivre son déplacement horizontal jusqu'à la fin de celui du chariot supérieur 5 est compensée par le fait que la bielle 19 est bloquée par le pivotement de la bielle 18, et bloque elle-même le chariot inférieur 6, tandis que le galet 7 du chariot supérieur 5 pénètre dans la partie inclinée vers le haut de la branche du côté correspondant de la came en V8 du chariot inférieur 6 et permet à celui-ci de se déplacer vers le bas d'une façon sensiblement verticale pendant la fin de course horizontale du chariot supérieur 5 à chacune des extrémités de ses déplacements alternatifs ; l'autre paire de bielles 18, 19 ne gène pas ce déplacement vertical, comme le montre la figure 4, son galet 20 s'effaçant vers le haut, l'extrémité correspondante du chariot inférieur 6 reste suspendue à l'extrémité correspondante du chariot supérieur 5 par le galet 7 de ce côté du chariot supérieur, engagé dans la came 8 dudit côté du chariot inférieur.

Les dispositifs prévus sur le chariot inférieur 6 pour appréhender la tôle à usiner, la transporter jusque dans la presse et la déposer dans celle-ci n'ont pas été représentés.

Il est du reste bien entendu que le mode de réalisation de la présente invention qui a été décrit ci-dessus en référence au dessin annexé a été donné à titre purement indicatif et non limitatif et que de nombreuses modifications peuvent être apportées sans qu'on s'écarte pour cela du cadre de la présente invention comme revendiquée.

## Revendications

1. Appareil de manutention comportant un bâti (1) sur lequel peut coulisser entre deux positions extrêmes un équipage mobile, et des moyens pour faire coulisser cet équipage mobile d'une extrémité à l'autre de ce bâti, cet équipage mobile étant constitué d'un premier chariot (5) porté par ce bâti et entraîné directement en coulissement sur lui par les moyens précités, et un deuxième chariot (6), susceptible d'être entraîné en translation par le premier et muni de moyens de préhension d'objets, qu'il peut saisir à une extrémité de son coulissement et déposer à l'autre extrémité dudit coulissement, ce deuxième chariot étant automatiquement déplacé en hauteur par rapport au premier chariot à chacune de ses extrémités de coulissement par des galets (7) portés par ledit premier chariot, coopérant avec des cames (8) prévues dans ledit deuxième chariot, caractérisé en ce que, s'agissant d'un chargeur de presse susceptible de saisir au voisinage d'une des extrémités de son bâti la tôle supérieure d'un empilage de tôles destinées à être usinées successivement, à la soulever sensiblement verticalement, puis à la transporter jusqu'à l'autre extrémité du bâti et à l'y déposer par un abaissement sensiblement vertical, dans la presse précitée, pour y être usinée, le deuxième chariot (6), dénommé ci-après chariot inférieur, est suspendu au premier chariot (5), dénommé ci-après chariot supérieur, par quatre paires de bielles (18 et 19) et est déplacé automatiquement par rapport au chariot supérieur, successivement vers le bas à chaque fin de course dans un sens ou dans l'autre, puis vers le haut à chaque début de course en sens inverse, grâce à des cames (22) dirigées vers le bas, prévues à chaque extrémité des rails horizontaux (21) du bâti (1) sur lesquels roulent les galets (20), auxquels sont suspendues les paires de bielles (18 et 19) par lesquelles le chariot inférieur (6) est suspendu au chariot supérieur (5), et à des cames en V (8) prévues dans le chariot inférieur (6) coopérant avec des galets (7) du chariot supérieur (5), les cames (22) dirigées vers le bas du bâti (1) et les cames en V (8) du chariot inférieur (6) étant agencées pour provoquer, en combinaison avec les paires de bielles (18 et 19), un abaissement vertical du chariot inférieur (6) par rapport au chariot supérieur (5), en fin de course dans un sens ou dans l'autre desdits chariots, puis un soulèvement vertical dudit chariot inférieur (6), par rapport audit chariot supérieur (5), au début de chaque course dans un sens ou dans l'autre.

2. Chargeur de presse suivant la revendication 1, caractérisé en ce qu'un arbre de commande (11), animé d'un mouvement de rotation autour de son axe, entraîne en rotation autour dudit axe un bras (12), à l'extrémité libre duquel une bielle (13), de longueur inférieure à celle du bras est montée rotative autour d'un axe parallèle à celui de l'arbre de commande, et cette bielle est entraînée elle-même en rotation autour de cet axe à une vitesse angulaire égale à celle du bras mais en sens inverse, l'extrémité libre de ladite bielle étant attelée au chariot supérieur (5) par l'intermédiaire d'une biellette (14).

3. Chargeur de presse suivant la revendication 2, caractérisé en ce que les calages angulaires du bras et de la bielle sur leurs axes respectifs sont tels que lorsqu'ils sont en prolongement l'un de l'autre, dans un sens ou dans l'autre, ils sont parallèles au sens du coulissement alternatif du chariot supérieur sur le bâti.

4. Chargeur de presse suivant l'une quelconque des revendications 2 ou 3, caractérisé en ce que la bielle (13) est solidaire en rotation d'un pignon d'extrémité (15), en prise avec un pignon intermédiaire (16), librement rotatif autour d'un axe porté par le bras (12) et parallèle à l'arbre de commande (11), également en prise avec un pignon central (17) concentrique à l'arbre de commande (11) et dont le nombre de dents est double de celui du pignon d'extrémité (15).

5. Chargeur de presse suivant l'une quelconque des revendications 1 à 4, caractérisé en ce que, lorsqu'à chacune des extrémités des déplacements horizontaux alternatifs du chariot supérieur (5) sur les rails (2), les galets (20) montés sur les bielles (18a) des paires de bielles (18, 19) de l'une des extrémités de l'équipage mobile, qui roulent sur les rails horizontaux (21), pénètrent dans les cames (22) du côté correspondant du bâti (1) qui les fait pivoter vers le bas, la tendance du chariot inférieur (6) à poursuivre son déplacement horizontal jusqu'à la fin de celui du chariot supérieur (5) est compensée par le fait que la bielle (19) est bloquée par le pivotement de la bielle (18), et bloque elle-même le chariot inférieur (6) tandis que le galet (7) du chariot supérieur (5) pénètre dans la partie inclinée vers le haut de la branche du côté correspondant de la came en V (8) du chariot inférieur (6) et permet à celui-ci de se déplacer vers le bas d'une façon sensiblement verticale pendant la fin de course horizontale du chariot supérieur (5) à chacune des extrémités de ses déplacements alternatifs.

## Claims

1. A handling apparatus comprising a frame (1) on which a movable element can slide between two end positions, and means for causing the movable element to slide from one end of this frame to the other, the movable element being formed by a first carriage (5) carried by the frame and driven directly in sliding motion thereon by the aforementioned means, and a second carriage (6) which can be driven in translation movement by the first carriage and which is provided with means for gripping articles which can be grasped by it at one end of its sliding motion and deposited at the other end of said sliding motion, this second carriage being automatically displaced vertically in relation to the first carriage at each end of its sliding motion by rollers (7) carried by said first carriage and cooperating with cams (8) provided in said second carriage, characterised in that, in the case of a press loader able to grip in the vicinity of one of the ends of its frame the top sheet of a stack of sheets intended to be successively machined, lift it substantially vertically, then convey it to the other end of the frame and deposit it there by lowering it substantially vertically into the aforementioned press so as to be machined thereby, the second carriage (6), hereinafter designated the lower carriage, is suspended from the first carriage (5), hereinafter designated the upper carriage, by four pairs of connecting rods (18 and 19) and is automatically displaced in relation to the upper carriage, successively downwards at each end of travel in one direction or the other, then upwards at each start of travel in opposite direction, by means of downwardly directed cams (22) provided at each end of horizontal rails (21) of the frame (1), on which rails roll rollers (20) from which are suspended the pairs of connecting rods (18 and 19) by means of which the lower carriage (6) is suspended from the upper carriage (5), and by means of V-shaped cams (8) provided in the lower carriage (6) cooperating with the rollers (7) of the upper carriage (5), the cams (22) being directed towards the bottom of the frame (1) and the V-shaped cams (8) of the lower carriage (6) being arranged so as to bring about, in combination with the pairs of connecting rods (18 and 19), vertical lowering of the lower carriage (6) in relation to the upper carriage (5), at the end of travel in one direction or the other of said carriages, then vertical raising of said lower carriage (6), in relation to said upper carriage (5), at the start of travel in each case in one direction or the other.

2. A press loader according to Claim 1, characterised in that a drive shaft (11), which is actuated in rotating movement about its axis, drives in rotating movement about said axis an arm (12), at the free end of which a connecting rod (13), which is shorter than the arm, is mounted to rotate about an axis parallel to that of the drive shaft, and this connecting rod is itself driven to rotate about this axis at an angular velocity equal to that of the arm but in an opposite direction, the free end of said connecting rod being coupled to the upper carriage (5) by way of a link (14).

3. A press loader according to Claim 2, characterised in that the angular location of the arm and connecting rod on their respective axes is such that when they are in extension of one another, in one direction or the other, they are parallel to the direction of reciprocating sliding motion of the upper carriage on the frame.

4. A press loader according to either of Claims 2 or 3, characterised in that the connecting rod (13) is fixed to rotate with an end pinion (15) meshing with an intermediate pinion (16) which can rotate freely about an axis carried by the arm (12) and parallel to the drive shaft (11), likewise meshing with a central pinion (17) concentric with the drive shaft (11) and the number of teeth of which is twice that of the end pinion (15).

5. A press loader according to any one of Claims 1 to 4, characterised in that when, at each of the ends of the reciprocating horizontal movements of the upper carriage (5) on the rails (2), the rollers (20) mounted on the connecting rods (18a) of the pairs of connecting rods (18, 19) of one of the ends of the movable element which roll on the horizontal rails (21) penetrate into the cams (22) on the corresponding side of the frame (1), thereby causing them to pivot downwards, the tendency of the lower carriage (6) to follow its horizontal movement until the end of that of the upper carriage (5) is compensated by the fact that the connecting rod (19) is blocked by the pivoting of the connecting rod (18) and itself blocks the lower carriage (6), whereas the roller (7) of the upper carriage (5) penetrates into the upwardly inclined portion of the limb of the corresponding side of the V-shaped cam (8) of the lower carriage (6) and enables the latter to be moved downwards in substantially vertical manner at the end of the horizontal travel of the upper carriage (5) at each end of its reciprocating movements.

## Patentansprüche

1. Handhabungsgerät mit einem Rahmen (1), auf dem eine bewegliche Anordnung zwischen zwei Endlagen verschiebbar ist, und mit Mitteln zum Verschieben dieser Anordnung von einem Ende des Rahmens zu dessen anderem Ende, wobei die bewegliche Anordnung aus einem ersten Wagen (5) besteht, der von dem Rahmen getragen und auf diesem von den vorgenannten Mitteln verschoben wird, und aus einem zweiten Wagen (6) besteht, der von dem ersten Wagen translatorisch antreibbar ist und mit Mitteln zum Ergreifen von Objekten ausgerüstet ist, die er am einen Ende seiner Verschiebebewegung ergreifen und am anderen Ende dieser Verschiebebewegung ablegen kann, wobei dieser zweite Wagen an jedem Ende seiner Verschiebebewegung gegenüber dem ersten Wagen automatisch durch Rollen (7) höhenversetzt wird, die der erste Wagen trägt und die mit Kurvenbahnen (8) zusammenwirken, die an dem zweiten Wagen vorgesehen sind, dadurch gekennzeichnet, daß es sich um eine Pressenbeschickungsvorrichtung handelt, die nahe dem einen Ende ihres Rahmens das obere Blech eines Stapels von nacheinander zu bearbeitenden Blechen entnehmen, es etwa senkrecht anheben, sodann bis zum anderen Ende des Rahmens transportieren und dort durch etwa senkrechtes Absenken in der genannten Presse ablegen kann, damit es dort bearbeitet wird, und daß der zweite Wagen (6), hier unterer Wagen genannt, an dem ersten Wagen (5), hier oberer Wagen genannt, über vier Schubstangenpaare (18 und 19) aufgehängt oder gelagert ist und automatisch gegenüber dem oberen Wagen nacheinander am Ende jedes Weges in der einen oder der anderen Richtung nach unten und sodann am Anfang des Weges in der entgegengesetzten Richtung nach oben zufolge von Kurvenbahnen (22) verschoben wird, die nach unten gerichtet an jedem Ende von waagerechten Schienen (21) des Rahmens (1) vorgesehen sind und auf denen Rollen (20) laufen, an denen die Schubstangenpaare (18 und 19) gelagert sind, über die der untere Wagen (6) an dem oberen Wagen (5) aufgehängt ist, und zufolge von V-förmigen Kurvenbahnen (8), die an dem unteren Wagen (6) vorgesehen sind und mit Rollen (7) des oberen Wagens (5) zusammenwirken, wobei die im Rahmen (1) nach unten gerichteten Kurvenbahnen (22) und die V-förmigen Kurvenbahnen (8) des unteren Wagens (6) so angeordnet sind, daß sie in Verbindung mit den Schubstangenpaaren (18 und 19) eine senkrechte Absenkung des unteren Wagens (6) in bezug auf den oberen Wagen (5) am Ende des Laufweges der Wagen in der einen oder der anderen Richtung und anschließend ein senkrechtes Anheben des unteren Wagens (6) in bezug auf den oberen Wagen (5) zu Beginn jedes Laufweges in der einen oder der anderen Richtung bewirken.

2. Pressenbeschickungsvorrichtung nach Anspruch 1, dadurch gekennzeichnet, daß eine Steuerwelle (11), die um ihre Achse drehangetrieben ist, um diese Achse einen Arm (12) dreht, an dessen freien Ende eine Schubstange (13), deren Länge kleiner als die Länge des Arms ist, drehbar um eine zu der Achse der Steuerwelle parallele Achse angeordnet ist, und daß diese Schubstange ihrerseits um diese Achse mit einer Winkelgeschwindigkeit in Drehung versetzt wird, die gleich derjenigen des Armes ist, jedoch gegensinnig gerichtet ist, und daß das freie Ende der Schubstange über eine Schwinge (14) an den oberen Wagen (5) angekuppelt ist.

3. Pressenbeschickungsvorrichtung nach Anspruch 2, dadurch gekennzeichnet, daß der Arm und die Schubstange auf ihren jeweiligen Achsen winkelmäßig derart festgelegt sind, daß sie dann, wenn sie in der einen oder der anderen Richtung gestreckt längs einer Linie hintereinander liegen, parallel zur Richtung der abwechselnden Verschiebewegung des oberen Wagens auf dem Rahmen sind.

4. Pressenbeschickungsvorrichtung nach einem der Ansprüche 2 oder 3, dadurch gekennzeichnet, daß die Schubstange (13) drehfest mit einem Endzahnrad (15) verbunden ist, das sich im Eingriff mit einem Zwischenzahnrad (16) befindet, das frei drehbar auf einer Achse sitzt, die von dem Arm (12) getragen wird und parallel zu der Steuerwelle (11) ist, welches Zwischenzahnrad (16) sich im Eingriff mit einem Zentralzahnrad (17) befindet, das konzentrisch zu der Steuerwelle (11) angeordnet ist und dessen Zähnezahl doppelt so groß wie diejenige des Endzahnrades (15) ist.

5. Pressenbeschickungsvorrichtung nach einem der Ansprüche 1 bis 4, dadurch gekennzeichnet, daß, sobald an jedem der Enden der abwechselnden horizontalen Verschiebebewegungen des oberen Wagens (5) auf den Schienen (2) die Rollen (20), die an den Schubstangen (18a) der Schubstangenpaare (18, 19) des einen Endes der beweglichen Anordnung montiert sind und auf den waagerechten Schienen (21) laufen, in die Kurvenbahnen (22) der entsprechenden Seite des Rahmens (1) eindringen, welche Kurvenbahnen die Rollen nach unten verschwenken, das Bestreben des unteren Wagens (6), seine waagerechte Verschiebung bis zum Ende derjenigen des oberen Wagens (5) fortzusetzen, durch den Umstand kompensiert wird, daß die Schubstange (19) durch das Schwenken der Schubstange (18) blockiert wird und ihrerseits den unteren Wagen (6) blockiert, während die Rolle (7) des oberen Wagens (5) in den nach oben in dem Abschnitt der entsprechenden Seite gerichteten Teil der V-förmigen Kurvenbahn (8) des unteren Wagens (6) eintritt und es diesem ermöglicht, sich an jedem der Enden seiner wechselweisen Verschiebungen während der Beendigung des waagerechten Laufs des oberen Wagens (5) im wesentlichen senkrecht nach unten zu verschieben.

Fig.1

*Fig. 2*

*Fig.3*

*Fig. 4*

0 125 189

Fig.5

0 125 189